# EUROPÄISCHE PATENTSCHRIFT

(11) **EP 3 136 688 B1**
(45) Veröffentlichungstag und Bekanntmachung des Hinweises auf die Patenterteilung: **23.06.2021**
(21) Anmeldenummer: 15183171.6
(22) Anmeldetag: 31.08.2015
(51) Int. Cl.: H04L 29/08, H04L 29/06

(54) **VERFAHREN ZUR BEREITSTELLUNG EINES ZUGRIFFS AUF GERÄTEKONFIGURATIONSDATEN INNERHALB EINES INDUSTRIELLEN AUTOMATISIERUNGSSYSTEMS UND WEB-SERVER-KOMPONENTE**
METHOD FOR PROVISION OF ACCESS TO CONFIGURATION DATA WITHIN AN INDUSTRIAL AUTOMATION SYSTEM AND WEB SERVER COMPONENT
PROCÉDÉ DE PRÉPARATION D'UN ACCÈS À DES DONNÉES DE CONFIGURATION D'APPAREIL DANS UN SYSTÈME D'AUTOMATISATION INDUSTRIEL ET COMPOSANTS DE SERVEUR WEB

(43) Veröffentlichungstag der Anmeldung: 01.03.2017
(73) Patentinhaber: Siemens Aktiengesellschaft, 80333 München (DE)
(72) Erfinder: Albrecht, Harald, 90475 Nürnberg (DE); Herberth, Harald, 90522 Oberasbach (DE)

(56) Entgegenhaltungen:
- DE-A1-102011 078 030
- US-A1- 2003 225 911
- DUJUAN GU ET AL: "A transparent solution for legacy applications between heterogeneous networks", 2013 IEEE GLOBAL COMMUNICATIONS CONFERENCE (GLOBECOM), IEEE, 9. Dezember 2013 (2013-12-09), Seiten 2176-2181, XP032604566, DOI: 10.1109/GLOCOM.2013.6831397 [gefunden am 2014-06-11]
- None

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 1 770 458 A2 ist ein industrielles Automatisierungssystem mit zumindest einer speicherprogrammierbaren Steuerungseinheit beschrieben, bei dem eine Konfigurationseinheit zur Konfiguration der Steuerungseinheit und zur Bekanntgabe ihrer Verfügbarkeit an einem Kommunikationsnetz vorgesehen ist. Die Konfigurationseinheit weist der Steuerungseinheit dabei eine eindeutige Kommunikationsnetzadresse zu, die beispielsweise eine IPv6-Adresse sein kann. Auf diese Weise kann die Steuerungseinheit automatisch in Betrieb genommen werden.

Aus US 7 333 510 B1 ist ein Verfahren zur Datenübermittlung bekannt, bei dem eine Namensdienstkomponente innerhalb eines Teilnetzes für eine Gruppe von Kommunikationsgeräten IPv4-Adressen und zugeordnete Gerätenamen erfasst. Für die Gruppe von Kommunikationsgeräten wird aus einem dem Teilnetz zugeordneten IPv6-Präfix und den IPv4-Adressen der Kommunikationsgeräte jeweils eine IPv6-Adresse berechnet. Außerdem werden für die Gruppe von Kommunikationsgeräten aus den IPv4-Adressen der Kommunikationsgeräte und den berechneten IPv6-Adressen Adressumsetzungsregeln ermittelt. Die ermittelten Adressumsetzungsregeln werden durch eine Adressumsetzungseinheit für eine Adressumsetzung zwischen IPv4-Adressen und IPv6-Adressen angewendet.

In Internet Engineering Task Force (IETF), Request for Comments (RFC) 6145 und 6146, ISSN 2070-1721, April 2011 (siehe http://www.rfc-base.org/txt/rfc-6145.txt und http://www.rfc-base.org/txt/rfc-6146.txt) ist eine Umsetzung von Transmission Control Protocol (TCP)- und User Datagram Protocol (UDP) Kommunikationsverbindungen, die auf Internet Protocol, Version 6 (IPv6) basieren, auf Internet Protocol, Version 4 (IPv4) basierte Kommunikationsverbindungen beschrieben. Eine derartige Umsetzung wird dabei als NAT64 (Network Address Translation) bezeichnet. Mittels NAT können IPv6-basierte Kommunikationsgeräte auf IPv4-basierte Kommunikationsgeräte zugreifen, indem insbesondere eine Adressformatanpassung vorgenommen wird. Im Rahmen von NAT64 nutzen IPv6-Kommunikationsgeräte für einen Zugriff auf IPv4-Kommunikationsgeräte virtuelle IPv6-Adressen, die mittels eines NAT64-Servers durch den IPv4-Kommunikationsgeräten zugeordnete IPv4-Adressen ersetzt werden. In analoger Weise werden Kommunikationsnetzadressen für Rückkanäle von IPv4-Kommunikationsgeräten zu IPv6-kommunikationsgeräten umgesetzt. Dabei ist für einen Rückkanal grundsätzlich zunächst ein zugeordneter Vorwärtskanal einzurichten.

Darüber hinaus ist aus IETF, RFC 6147 (siehe http://www.rfc-base.org/txt/rfc-6147.txt) bekannt, in einem Domain Name System (DNS) aus IPv4-Adresseinträgen, die als A Resource Records (RR) bezeichnet werden, zugeordnete IPv6-Adresseinträge (AAAA Resource Records) zu berechnen und diese durch DNS-Server bereitzustellen. Eine Ableitung von AAAA Resource Records aus A Records kann grundsätzlich manuell durch einen DNS-Administrator durchgeführt, mittels einer IP Adress Management (IPAM) Lösung projektiert oder mittels DNS64-Servern laufend automatisch ermittelt werden. Eine automatische Ermittlung mittels DNS64-Servern bietet sich immer dann an, wenn nach einem AAAA Resource Record zu einem Namen gefragt wird, zu dem nur A Resource Records existieren.

Aus DE 10 2011 078030 A1 ist ein Verfahren zum Betreiben eines, einen Sensor bzw. einen Aktor bildenden Feldgerätes bekannt, das über ein Feldbussystem mit mindestens einem weiteren Feldgerät in Feldbus-Kommunikationsverbindung steht, das einen Webserver aufweist und das eine Webbrowser-Webserver-Kommunikationsschnittstelle aufweist. Nach Empfangen einer Webbrowser-Anfrage hinsichtlich einem weiteren Feldgerät zugeordneter Informationen, erfolgt ein Abfragen der angefragten Informationen von dem weiteren Feldgerät über die Feldbus-Kommunikationsverbindung. Anschließend erfolgt ein Einbinden der von dem weiteren Feldgerät erhaltenen Informationen in eine Webseite und ein Bereitstellen der Webseite über die Webbrowser-Webserver-Kommunikationsschnittstelle.

Viele Automatisierungsgeräte umfassen mittlerweile integrierte Web-Server. Über solche integrierten Web-Server können sich Anwender auf einfache Weise Diagnose- bzw. Gerätekonfigurationsinformationen anzeigen lassen. Hierzu zählen auch Diagnose- bzw. Gerätekonfigurationsinformationen untergeordneter Automatisierungs- bzw. Feldgeräte, die per Verknüpfungen in Übersichtsseiten eines übergeordneten Automatisierungsgeräts abgerufen werden können. Weisen insbesondere die untergeordneten Automatisierungs- bzw. Feldgeräte nur IPv4-Adressen, so ist eine korrekte Auflösung der Verknüpfungen in den Übersichtsseiten bei einem Zugriff aus einem IPv6-Teilnetz problematisch. Derartige Probleme können allein durch Verwendung zwischengeschalteter NAT64-Router nicht gelöst werden, wenn Adressangaben in Daten auf Applikationsprotokoll-Ebene (Schicht 7 entsprechend OSI-Kommunikationsmodell) eingebettet sind. Derartige Adressangaben können durch NAT64-Router nicht erfasst werden, da diese lediglich auf Vermittlungs- bzw. Transportprotokoll-Ebene (Schicht 3 und 4 entsprechend OSI-Kommunikationsmodell) arbeiten.

Der vorliegenden Erfindung liegt daher die Aufgabe zugrunde, ein Verfahren zur zuverlässigen Web-Server-basierten Bereitstellung eines Zugriffs auf Gerätekonfigurationsdaten von Automatisierungsgeräten mit IPv4-Adressen aus IPv6-Teilnetzen zu schaffen sowie eine geeignete Vorrichtung zu dessen Durchführung anzugeben.

Diese Aufgabe wird erfindungsgemäß durch ein Verfahren mit den in Anspruch 1 angegebenen Merkmalen und durch eine Web-Server-Komponente mit den in Anspruch 14 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung eines Zugriffs auf Diagnose- bzw. Gerätekonfigurationsdaten innerhalb eines industriellen Automatisierungssystems stellt eine dem Web-Server-Komponente, die einem Teilnetz-Steuerungsgerät zugeordnet ist, zumindest ein Web-Dokument mit zumindest einem Verweis, beispielsweise Hyperlink, auf Gerätekonfigurationsdaten zumindest eines IPv4-basierten Automatisierungsgeräts bereit. Dabei umfasst das industrielle Automatisierungssystem ein Teilnetz mit mehreren Automatisierungsgeräten und dem Teilnetz-Steuerungsgerät. Bei einer Anforderung des Web-Dokuments wird überprüft, ob die Anforderung von einem anfordernden Kommunikationsgerät aus einem IPv6-Teilnetz stammt bzw. einen einer Web-Server-Komponente des IPv4-basierten Automatisierungsgeräts zugeordneten Ziel-Ressourcen-Identifikator, beispielsweise Uniform Resource Identifier, mit einer IPv6-Adresse oder mit einem Gerätenamen umfasst.

Erfindungsgemäß wird das Web-Dokument bei einem positiven Überprüfungsergebnis mit einem Verweis auf die Gerätekonfigurationsdaten bereitgestellt, der einen IPv6-Adressausdruck für das IPv4-basierte Automatisierungsgerät umfasst. Dagegen umfasst der Verweis auf die Gerätekonfigurationsdaten bei einer Anforderung des Web-Dokuments, die von einem anfordernden Kommunikationsgerät aus einem IPv4-Teilnetz stammt bzw. einen Ziel-Ressourcen-Identifikator mit einer IPv4-Adresse umfasst, einen IPv4-Adressausdruck. Für das IPv4-basierte Automatisierungsgerät wird aus einem dem Teilnetz zugeordneten IPv6-Präfix und der IPv4-Adresse des IPv4-basierten Automatisierungsgeräts eine IPv6-Adresse berechnet, wenn das Web-Dokument mit einem Verweis auf die Gerätekonfigurationsdaten bereitzustellen ist, der einen IPv6-Adressausdruck umfasst. In diesem Fall werden die berechnete IPv6-Adresse und der zugeordnete Gerätename in einem Namensdienst-Server gespeichert.

Dadurch dass die Verweise auf die Gerätekonfigurationsdaten in Abhängigkeit von empfängerseitigen Anforderungen adaptiv mit IPv6-Adressausdrücken bzw. Gerätenamen oder mit IPv4-Adressausdrücken erzeugt werden, können bestehende IPv4-basierte Automatisierungsgeräte ohne zusätzlichen Konfigurationsaufwand zuverlässig in ein übergeordnetes IPv6-Kommunikationsnetz integriert werden. Insbesondere werden trotz NAT64 bestehende Einschränkungen bei einer Web-Server-basierten Bereitstellung von Diagnose- bzw. Gerätekonfigurationsdaten von IPv4-basierten Automatisierungsgeräten aufgehoben.

Vorteilhafterweise werden Gerätekonfigurationsdaten der Automatisierungsgeräte durch Web-Server der Automatisierungsgeräte bereitgestellt, so dass die Web-Server-Komponente des Teilnetz-Steuerungsgeräts hiervon entlastet ist. Außerdem kann das Teilnetz mehrere Automatisierungsgeräte umfassen, denen jeweils zumindest eine IPv6-Adresse zugeordnet ist. In diesem Fall werden Verweise auf Gerätekonfigurationsdaten nur für Automatisierungsgeräte geändert, denen nur IPv4-Adressen zugeordnet sind. Damit können auch in gemischten IPv4/IPv6-Umgebungen zuverlässig Gerätekonfigurationsdaten von Automatisierungsgeräten bereitgestellt werden.

Der Ziel-Ressourcen-Identifikator kann beispielsweise in einem Host-Headerfeld der Anforderung angegeben werden. Bei einem fehlenden Host-Headerfeld umfasst der Verweis auf die Gerätekonfigurationsdaten vorzugsweise einen IPv4-Adressausdruck. Dagegen umfasst der Verweis auf die Gerätekonfigurationsdaten bei einem vorhandenen Host-Headerfeld und einem Ziel-Ressourcen-Identifikator, der eine IPv6-Adresse oder einen Gerätenamen des jeweiligen Automatisierungsgeräts umfasst, vorteilhafterweise einen IPv6-Adressausdruck. Das Host-Headerfeld kann zum Beispiel entsprechend RFC 7230 gebildet werden.

Entsprechend einer bevorzugten Ausgestaltung der vorliegenden Erfindung wird der Verweis auf die Gerätekonfigurationsdaten durch ein Adaptionsmodul erzeugt oder geändert, das der Web-Server-Komponente zugeordnet oder in das bereitgestellte Web-Dokument eingebettet ist. Insbesondere kann das Adaptionsmodul durch ein in eine bereitgestellte Web-Seite eingebettetes Skript realisiert sein, das in Abhängigkeit von einem Host-Headerfeld in einem zugrundeliegenden HTTP-Request (Hypertext Transfer Protocol) ein jeweils benötigtes Format von Hyperlinks auswählt, die auf Web-Seiten mit Gerätekonfigurationsdaten verweisen. Beispielsweise kann das Format entsprechend Document Object Model (DOM) durch eine inhaltlich zum Host-Headerfeld korrespondierende Eigenschaft "document location" ausgewählt werden. Grundsätzlich kann das Adaptionsmodul auf Anforderung zumindest eines anderen Moduls bzw. Applikationsmoduls der Web-Server-Komponente oder eigenständig Adressausdrücke umfassende Verweise auf Gerätekonfigurationsdaten in Web-Dokumenten erzeugen oder ändern. Entsprechend einer vorteilhaften Ausgestaltung überprüft das Adaptionsmodul die Anforderung des Web-Dokuments hinsichtlich ihres Ursprungs bzw. hinsichtlich des Ziel-Ressourcen-Identifikators.

Vorteilhafterweise erfasst eine dem Teilnetz-Steuerungsgerät zugeordnete Peripheriegeräte-Erfassungseinheit Gerätename-Adress-Zuordnungen von dem Teilnetz-Steuerungsgerät untergeordneten Automatisierungsgeräten. Die Gerätename-Adress-Zuordnungen können durch die Peripheriegeräte-Erfassungseinheit beispielsweise mittels Dynamic Configuration Protocol (DCP) bzw. Simple Network Management Protocol (SNMP) einfach und zuverlässig erfasst werden.

Entsprechend einer vorteilhaften Weiterbildung der vorliegenden Erfindung werden für die Automatisierungsgeräte mit IPv4-Adresse aus jeweiligen IPv4-Adressen und berechneten IPv6-Adressen Adressumsetzungsregeln ermittelt, die durch eine dem Teilnetz-Steuerungsgerät zugeordnete Adressumsetzungseinheit, beispielsweise NAT64-Router, für eine Adressumsetzung zwischen IPv4-

Adressen und IPv6-Adressen angewendet werden. Insbesondere kann die dem Teilnetz-Steuerungsgerät zugeordnete Web-Server-Komponente in einen NAT64-Router integriert sein, so dass die Web-Server-Komponente über eine IPv6-Adresse des NAT64-Routers angesprochen und Verweise auf Gerätekonfigurationsdaten aufgrund dessen mit IPv6-Adressausdrücken bzw. Gerätenamen bereitgestellt werden können. Grundsätzlich ist es jedoch auch möglich, dass die Web-Server-Komponente innerhalb ihres Teilnetzes nur über eine IPv4-Adresse ansprechbar ist und eine IPv6-Konnektivität erst durch einen vorgeschalteten NAT64-Router erhält. In diesem Fall umfassen aus einem IPv6-Teilnetz stammende Web-Dokument-Anforderungen nämlich einen der Web-Server-Komponente zugeordneten Ziel-Ressourcen-Identifikator mit einer (virtuellen) IPv6-Adresse oder mit einem Gerätenamen, so dass Verweise auf Gerätekonfigurationsdaten korrekt erzeugt bzw. geändert werden können

Die erfindungsgemäße Web-Server-Komponente ist zur Durchführung eines Verfahrens entsprechend vorstehenden Ausführungen vorgesehen und dafür ausgestaltet und eingerichtet, ein Web-Dokument mit zumindest einem Verweis auf Gerätekonfigurationsdaten zumindest eines IPv4-basierten Automatisierungsgeräts bereitzustellen. Des weiteren ist die Web-Server-Komponente dafür ausgestaltet und eingerichtet, bei einer Anforderung des Web-Dokuments zu überprüfen, ob die Anforderung von einem anfordernden Kommunikationsgerät aus einem IPv6-Teilnetz stammt bzw. einen einer Web-Server-Komponente des IPv4-basierten Automatisierungsgeräts zugeordneten Ziel-Ressourcen-Identifikator mit einer IPv6-Adresse umfasst. Außerdem ist die Web-Server-Komponente dafür ausgestaltet und eingerichtet, das Web-Dokument bei einem positiven Überprüfungsergebnis mit einem Verweis auf die Gerätekonfigurationsdaten bereitzustellen, der einen IPv6-Adressausdruck umfasst. Darüber hinaus ist die Web-Server-Komponente dafür ausgestaltet und eingerichtet, dass der Verweis auf die Gerätekonfigurationsdaten bei einer Anforderung des Web-Dokuments, die von einem anfordernden Kommunikationsgerät aus einem IPv4-Teilnetz stammt bzw. einen Ziel-Ressourcen-Identifikator mit einer IPv4-Adresse umfasst, einen IPv4-Adressausdruck umfasst.

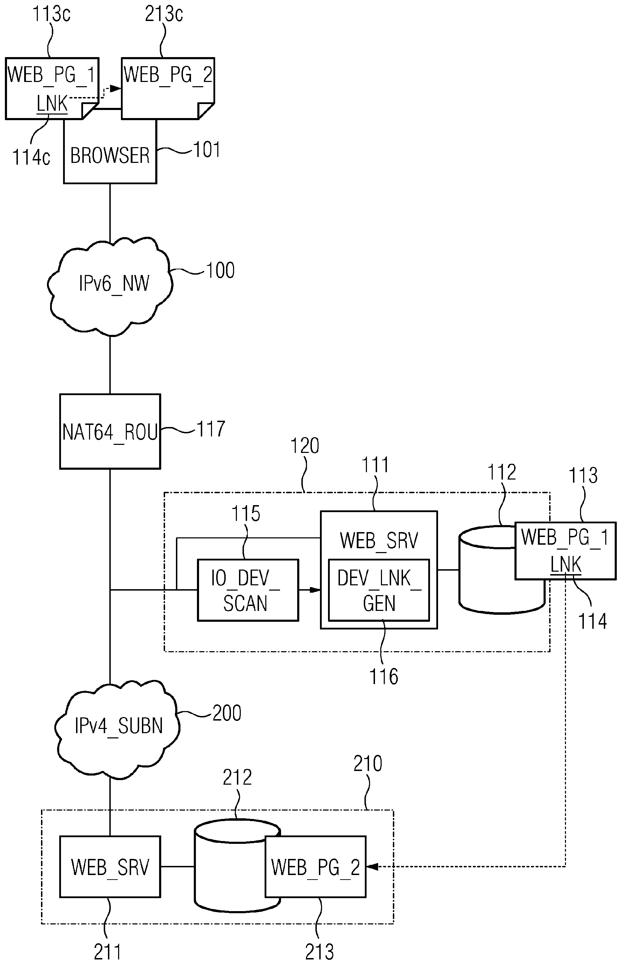

Die vorliegende Erfindung wird nahfolgend an einem Ausführungsbeispiel anhand der Zeichnung näher beschrieben. Es zeigt die
- Figur: ein industrielles Automatisierungssystem, das ein Teilnetz-Steuerungsgerät mit einer Web-Server-Komponente und ein IPv4-basiertes Automatisierungsgerät umfassten und einem umfasst.

Industrielle Automatisierungsgeräte, wie speicherprogrammierbare Steuerungen, dezentrale Peripheriemodule oder mit zu steuernden Geräten verbundene Ein-/Ausgabemodule, umfassen üblicherweise integrierte Web-Server. Über solche integrierten Web-Server können sich Anwender auf einfache Weise verschiedenartige Diagnoseinformationen anzeigen lassen. Entsprechend dem vorliegenden Ausführungsbeispiel können Anwender eine Übersichts-Web-Seite mit aktuell an eine Steuerung 120 angeschlossenen Feldgeräte 210 abrufen dargestellt. Derartige Übersichts-Web-Seiten 113 umfassen Hyperlinks 114 auf Web-Seiten, die unterlagerten Feldgeräten 210 zugeordnet sind. Entsprechend der Figur weist das dort dargestellte Feldgerät 210 einen eigenen Web-Server 211 mit einer zugeordneten Speichereinheit 212 für bereitgestellte Web-Seiten auf. Dies ist beispielsweise für Roboter-Steuerungen typisch. Das Feldgerät 210 ist im vorliegenden Ausführungsbeispiel rein IPv4-basiert und weist kein Kommunikationsmodul auf, das einen IPv6-Stack implementiert. Somit umfassen Hyperlinks 114 auf das Feldgerät 210 IPv4-Adressliterale, wie http://192.168.3.217.

In einer IPv6-Umgebung führen IPv4-Adressliterale entsprechend bisherigen Lösungen zu Problemen, insbesondere wenn innerhalb eines Automatisierungsnetzes keine durchgängige IPv6-Adressierung für sämtliche Automatisierungsgeräte realisiert ist und die Automatisierungsgeräte aufgrund von Network Address Translation (NAT) außerhalb ihres Automatisierungsnetzes über IPv6-Adressen grundsätzlich ansprechbar sind. Bei NAT64 sorgt ein zwischengeschalteter NAT64-Router 117 für eine Adress- und Protokollumsetzung zwischen IPv6 und IPv4. Allerdings erfasst NAT64 keine in Datagramme auf höheren Protokollebenen eingebetteten Kommunikationsnetzadressen. Dies betrifft insbesondere HTTP-Dokumente, die auf Applikationsebene (Schicht 7) entsprechend OSI-Kommunikationsmodell behandelt werden, während NAT64-Router lediglich Vermittlungs- und Transportebene (Schicht 3 und 4) abdecken.

Aus diesem Grund werden entsprechend dem vorliegenden Ausführungsbeispiel Hyperlinks 114 in durch einen Web-Server 111 der Steuerung 120 bereitgestellten Web-Seiten 113, 113c jeweils empfängerspezifisch entsprechend dessen Konnektivität adaptiert. Hierzu ist jedoch kein Dispatcher Web-Server vorgesehen, der Web-Seiten-Anfragen an unterlagerte Web-Server verteilt, sondern eine Adaption der Web-Seiten erfolgt wahlweise senderseitig vor Auslieferung oder sogar erst empfängerseitig. Die Adaption wird dabei auf Grundlage von Host-Headerfeldern in HTTP-Web-Seiten-Anforderungen realisiert. Die Web-Seiten 113, 113c sind zumindest in einer dem Web-Server 111 zugeordneten Speichereinheit 112 gespeichert.

Beispielsweise kann der Web-Server 111 der Steuerung 120 ein Modul 116 umfassen, das entweder eigenständig Hyperlinks in bereitzustellenden Web-Seiten 113 noch vor deren Übermittlung an jeweilige Empfänger adaptiert, indem vor einer Bereitstellung nach IPv4-Adressliteralen gesucht und diese je nach Empfänger-Konnektivität ersetzt werden. Entsprechend einer alternativen Ausführungsvariante kann das Modul 116 durch andere Module oder Applikationsmodule des Web-Servers 111 aufgerufen werden, sobald diese einen Hyperlink auf ein Automatisierungsgerät in einer Web-Seite erzeugen. In einer weiteren alternativen Ausführungsform ist das Modul 116 in die bereitgestellte Web-Seite 113c eingebettet. In diesem Fall wählt ein in die bereitgestellte Web-Seite 113c eingebettetes Skript eine jeweils benötigte Form der Hyperlinks 114c aus. Eine korrekte Auswahl der Form erfolgt vorteilhafterweise entsprechend Document Object Model (DOM) durch eine Spezifikation einer zum Host-Headerfeld konsistenten Eigenschaft "document.location". Das Modul 116 wird immer dann aktiv bzw. aufgerufen, wenn Hyperlinks auf unterlagerte Geräte in bereitzustellenden Web-Seiten 113, 113c zu erzeugen sind.

Durch vorliegende Lösung ist sichergestellt, dass empfängerseitig bei einer Anforderung von Diagnosedaten für das IPv4-basierte Feldgerät 210 Web-Seiten 113, 113c bereitgestellt werden, die Hyperlinks auf unterlagerte Feldgeräte mit IPv4-Adressliteralen enthalten, wenn die Anforderung aus einem IPv4-Netz 200 stammt und spricht der Web-Server 111 ursprünglich direkt über eine IPv4-Adresse angesprochen wird. Stammt die Anforderung dagegen aus einem IPv6-Netz 100 bzw. wird der Web-Server 111 über seinen DNS-Namen (Domain Name System) oder seine IPv6-Adressen angesprochen, werden Web-Seiten 113, 113c bereitgestellt, die in den Hyperlinks auf unterlagerte Feldgeräte mittels DNS-Namen verweisen.

Vorzugsweise erfolgt die Auswahl der jeweils benötigten Form der Hyperlinks 114c auf Grundlage von entsprechend IETF, RFC 7230, Abschnitt 5.4 (siehe http://www.rfc-base.org/txt/rfc-7230.txt) gebildeten Host-Headerfeldern. Fehlt das Host-Headerfeld oder umfasst einen URI-Host (Uniform Resource Identifier) in Form eines IPv4-Adressliterals, wird eine bereitzustellende Web-Seite 113, 113c mit Verweisen auf unterlagerte Feldgeräte in Form von IPv4-Adressliteralen generiert. Ist das Host-Headerfeld dagegen vorhanden und umfasst der URI-Host einen DNS-Namen oder ein IPv6-Adressliteral, wird eine bereitzustellende Web-Seite 113, 113c mit Verweisen auf unterlagerte Feldgeräte in Form von DNS-Namen generiert.

Vorliegendes Ausführungsbeispiel baut auf einer DNS-Infrastruktur auf, die beispielweise mittels eines in der älteren europäischen Patentanmeldung 15162021.8 beschriebenen konfigurationsfreien Auffindens und Einbindens von DNS-Servern in IPv6-basierte Automatisierungsnetze realisiert sein kann. Zusätzlich kann eine in der älteren europäischen Patentanmeldung 14171757.9 beschriebene automatische stabile und adaptive Vergabe von Präfixen in segmentierten Inselnetzen vorgesehen sein. Eine derartige Lösung ist in IPv6-Inselnetzen sogar konfigurationsfrei.

Der Web-Server 111 kann beispielsweise mit dem NAT64-Router 117 zusammengefasst bzw. in diesen integriert sein. Vorteilhafterweise werden DNS-Namen unterlagerter Feldgeräte innerhalb des IPv4-Netzes 200 mittels eines Geräte-Scanners 115 erfasst und für ein Erzeugen kontext-abhängiger Hyperlinks an den Web-Server 111 übermittelt. Der Geräte-Scanner 115 kann IPv4-Adressen und Gerätenamen der unterlagerten Feldgeräte beispielsweise per DCP (Dynamic Configuration Protocol) oder SNMP (Simple Network Management Protocol) ermitteln. Weiterhin können auch Projektierungsinformationen hinzugezogen werden.

Sind der Web-Server 111 und der NAT64-Router 117 als voneinander getrennte Geräte ausgeführt, ist der Web-Server 111 unter Umständen nur per IPv4 ansprechbar. Aufgrund des zwischengeschalteten NAT64-Routers 117 ist der Web-Server 111 durch einen dem IPv6-Netz 100 zugeordneten Web-Browser 101 zumindest über seine virtuelle IPv6-Adresse ansprechbar. Somit kann der Web-Browser 101 eine Web-Seiten-Anforderung mit einem Host-Headerfeld, das den DNS-Namen des Web-Servers 111 umfasst, an den Web-Server 111 übermitteln. Aufgrund dessen wird die bereitzustellende Webseite 113, 113c korrekt mit DNS-Namen anstelle von IPv4-Adressliteralen erzeugt. DNS-Namen umfassende Hyperlinks 114c in der bereitgestellten Web-Seite 113c werden infolgedessen korrekt in IPv6-Adressen bzw. virtuelle IPv6-Adressen unterlagerter Feldgeräte aufgelöst. Bei rein IPv4-basierten Feldgeräten sorgt dann der NAT64-Router für eine entsprechende IPv6/IPv4-Konnektivität.

## Patentansprüche

1. Verfahren zur Bereitstellung eines Zugriffs auf Gerätekonfigurationsdaten innerhalb eines industriellen Automatisierungssystems, bei dem
- das industrielle Automatisierungssystem ein Teilnetz (200) mit mehreren Automatisierungsgeräten (210) und einem Teilnetz-Steuerungsgerät (120) umfasst,
- eine dem Teilnetz-Steuerungsgerät (120) zugeordnete Web-Server-Komponente (111) zumindest ein Web-Dokument (113) mit zumindest einem Verweis (114) auf Gerätekonfigurationsdaten zumindest eines IPv4-basierten Automatisierungsgeräts (210) bereitstellt,
- bei einer Anforderung des Web-Dokuments (113) überprüft wird, ob die Anforderung von einem anfordernden Kommunikationsgerät aus einem IPv6-Teilnetz (100) stammt und/oder einen einer Web-Server-Komponente (211) des IPv4-basierten Automatisierungsgeräts (210) zugeordneten Ziel-Ressourcen-Identifikator mit einer IPv6-Adresse umfasst,
- das Web-Dokument (113) bei einem positiven Überprüfungsergebnis mit einem Verweis (114) auf die Gerätekonfigurationsdaten bereitgestellt wird, der einen IPv6-Adressausdruck für das IPv4-basierte Automatisierungsgerät (210) umfasst,
- das Web-Dokument (113) dagegen bei einer Anforderung des Web-Dokuments (113), die von einem anfordernden Kommunikationsgerät aus einem IPv4-Teilnetz (200) stammt und/oder einen Ziel-Ressourcen-Identifikator mit einer IPv4-Adresse umfasst, mit einem Verweis (114) auf die Gerätekonfigurationsdaten bereitgestellt wird, der einen IPv4-Adressausdruck für das IPv4-basierte Automatisierungsgerät (210) umfasst,
- für das IPv4-basierte Automatisierungsgerät (210) aus einem dem Teilnetz (200) zugeordneten IPv6-Präfix und der IPv4-Adresse des IPv4-basierten Automatisierungsgeräts (210) eine IPv6-Adresse berechnet wird und die berechnete IPv6-Adresse und der zugeordnete Gerätename des IPv4-basierten Automatisierungsgeräts (210) in einem Namensdienst-Server gespeichert werden, wenn das Web-Dokument (113) mit einem Verweis (114) auf die Gerätekonfigurationsdaten des IPv4-basierten Automatisierungsgeräts (210) bereitzustellen ist, der einen IPv6-Adressausdruck umfasst.

2. Verfahren nach Anspruch 1,
bei dem der Verweis auf die Gerätekonfigurationsdaten durch ein Adaptionsmodul erzeugt oder geändert wird, das der Web-Server-Komponente zugeordnet oder in das bereitgestellte Web-Dokument eingebettet ist.

3. Verfahren nach Anspruch 2,
bei dem das Adaptionsmodul auf Anforderung zumindest eines Applikationsmoduls der Web-Server-Komponente oder eigenständig Adressausdrücke umfassende Verweise auf Gerätekonfigurationsdaten in Web-Dokumenten erzeugt oder ändert.

4. Verfahren nach einem der Ansprüche 2 oder 3,
bei dem das Adaptionsmodul die Anforderung des Web-Dokuments hinsichtlich ihres Ursprungs und/oder hinsichtlich des Ziel-Ressourcen-Identifikators überprüft.

5. Verfahren nach einem der Ansprüche 1 bis 4,
bei dem eine dem Teilnetz-Steuerungsgerät zugeordnete Peripheriegeräte-Erfassungseinheit Gerätename-Adress-Zuordnungen von dem Teilnetz-Steuerungsgerät untergeordneten Automatisierungsgeräten erfasst.

6. Verfahren nach Anspruch 5,
bei dem die Gerätename-Adress-Zuordnungen mittels Dynamic Configuration Protocol und/oder Simple Network Management Protocol erfasst werden.

7. Verfahren nach einem der Ansprüche 1 bis 6,
bei dem für die Automatisierungsgeräte mit IPv4-Adresse aus jeweiligen IPv4-Adressen und berechneten IPv6-Adressen Adressumsetzungsregeln ermittelt werden, und bei dem die ermittelten Adressumsetzungsregeln durch eine dem Teilnetz-Steuerungsgerät zugeordnete Adressumsetzungseinheit für eine Adressumsetzung zwischen IPv4-Adressen und IPv6-Adressen angewendet werden.

8. Verfahren nach Anspruch 7,
bei dem die dem Teilnetz-Steuerungsgerät zugeordnete Web-Server-Komponente in die Adressumsetzungseinheit integriert ist, und bei dem die Adressumsetzungseinheit einen Router umfasst.

9. Verfahren nach einem der Ansprüche 1 bis 8,
bei dem der Ziel-Ressourcen-Identifikator in einem Host-Headerfeld der Anforderung angebbar ist, und bei dem der Verweis auf die Gerätekonfigurationsdaten bei einem fehlenden Host-Headerfeld einen IPv4-Adressausdruck umfasst, und bei dem der Verweis auf die Gerätekonfigurationsdaten bei einem vorhandenen Host-Headerfeld und einem Ziel-Ressourcen-Identifikator, der eine IPv6-Adresse oder einen Gerätenamen des jeweiligen Automatisierungsgeräts umfasst, einen IPv6-Adressausdruck umfasst.

10. Verfahren nach Anspruch 9,
bei dem das Host-Headerfeld entsprechend RFC 7230 gebildet wird.

11. Verfahren nach einem der Ansprüche 1 bis 10,
bei dem der Gerätename des Automatisierungsgeräts ein Domain Name System Name ist.

12. Verfahren nach einem der Ansprüche 1 bis 11,
bei dem Gerätekonfigurationsdaten der Automatisierungsgeräte durch Web-Server der Automatisierungsgeräte bereitgestellt werden.

13. Verfahren nach einem der Ansprüche 1 bis 12,
bei dem das Teilnetz mehrere Automatisierungsgeräte umfasst, denen jeweils zumindest eine IPv6-Adresse zugeordnet ist, und bei dem Verweise auf Gerätekonfigurationsdaten nur für Automatisierungsgeräte geändert werden, denen nur IPv4-Adressen zugeordnet sind.

14. Web-Server-Komponente zur Durchführung eines Verfahrens nach einem der Ansprüche 1 bis 13, dafür ausgestaltet und eingerichtet,
- ein Web-Dokument (113) mit zumindest einem Verweis (114) auf Gerätekonfigurationsdaten zumindest eines IPv4-basierten Automatisierungsgeräts (210) bereitzustellen, wobei das Automatisierungsgerät (210) innerhalb eines industriellen Automatisierungssystems von einem Teilnetz (210) mit einem Teilnetz-Steuerungsgerät (120) umfasst ist,
- bei einer Anforderung des Web-Dokuments (113) zu überprüfen, ob die Anforderung von einem anfordernden Kommunikationsgerät aus einem IPv6-Teilnetz (100) stammt und/oder einen einer Web-Server-Komponente (211) des IPv4-basierten Automatisierungsgeräts (210) zugeordneten Ziel-Ressourcen-Identifikator mit einer IPv6-Adresse umfasst,
- das Web-Dokument (113) bei einem positiven Überprüfungsergebnis mit einem Verweis (114) auf die Gerätekonfigurationsdaten bereitzustellen, der einen IPv6-Adressausdruck für das IPv4-basierte Automatisierungsgerät (210) umfasst,
- das Web-Dokument (113) dagegen bei einer Anforderung des Web-Dokuments (113), die von einem anfordernden Kommunikationsgerät aus einem IPv4-Teilnetz (200) stammt und/oder einen Ziel-Ressourcen-Identifikator mit einer IPv4-Adresse umfasst, mit einem Verweis (114) auf die Gerätekonfigurationsdaten bereitzustellen, der einen IPv4-Adressausdruck für das IPv4-basierte Automatisierungsgerät (210) umfasst,
- für das IPv4-basierte Automatisierungsgerät (210) aus einem dem Teilnetz (200) zugeordneten IPv6-Präfix und der IPv4-Adresse des IPv4-basierten Automatisierungsgeräts (210) eine IPv6-Adresse zu berechnen, wenn das Web-Dokument mit einem Verweis auf die Gerätekonfigurationsdaten des IPv4-basierten Automatisierungsgeräts (210) bereitzustellen ist, der einen IPv6-Adressausdruck umfasst.

## Claims

1. Method for providing access to device configuration data within an industrial automation system, in which
- the industrial automation system comprises a subnetwork (200) having a plurality of automation devices (210) and a subnetwork control unit (120),
- a web server component (111) allocated to the subnetwork control unit (120) provides at least one web document (113) together with at least one reference (114) to device configuration data of at least one IPv4-based automation device (210),
- in the event of a request for the web document (113), a check is carried out to determine whether the request originates from a requesting communication device from an IPv6 subnetwork (100) and/or comprises a destination resource identifier allocated to a web server component (211) of the IPv4-based automation device (210) and having an IPv6 address,
- if the check result is positive, the web document (113) is provided together with a reference (114) to the device configuration data that comprises an Ipv6 address expression for the IPv4-based automation device (210),
- if the request for the web document (113) originates from a requesting communication device from an IPv4 subnetwork (200) and/or comprises a destination resource identifier having an IPv4 address, on the other hand, the web document (113) is provided together with a reference (114) to the device configuration data that comprises an IPv4 address expression for the IPv4-based automation device (210),
- an IPv6 address is calculated for the IPv4-based automation device (210) from an IPv6 prefix allocated to the subnetwork (200) and the IPv4 address of the IPv4-based automation device (210), and the calculated IPv6 address and the allocated device name of the IPv4-based automation device (210) are stored in a name service server if the web document (113) is to be provided together with a reference (114) to the device configuration data of the IPv4-based automation device (210) that comprises an IPv6 address expression.

2. Method according to Claim 1,
in which the reference to the device configuration data is generated or changed by an adaptation module that is allocated to the web server component or is embedded in the provided web document.

3. Method according to Claim 2,
in which the adaptation module generates or changes references to device configuration data in web documents that comprise address expressions at the request of at least one application module of the web server component or autonomously.

4. Method according to either of Claims 2 and 3,
in which the adaptation module checks the web document request in respect of its origin and/or in respect of the destination resource identifier.

5. Method according to one of Claims 1 to 4,
in which a peripheral device recording unit allocated to the subnetwork control unit records device name address allocations of automation devices subordinate to the subnetwork control unit.

6. Method according to Claim 5,
in which the device name address allocations are recorded by means of the Dynamic Configuration Protocol and/or Simple Network Management Protocol.

7. Method according to one of Claims 1 to 6,
in which address conversion rules are determined for the automation devices having an IPv4 address from respective IPv4 addresses and calculated IPv6 addresses, and in which the determined address conversion rules are applied by an address conversion unit allocated to the subnetwork control unit for an address conversion between IPv4 addresses and IPv6 addresses.

8. Method according to Claim 7,
in which the web server component allocated to the subnetwork control unit is integrated in the address conversion unit, and in which the address conversion unit comprises a router.

9. Method according to one of Claims 1 to 8,
in which the destination resource identifier can be indicated in a host header field of the request, and in which, if the host header field is absent, the reference to the device configuration data comprises an IPv4 address expression, and in which, if the host header field and a destination resource identifier that comprises an IPv6 address or a device name of the respective automation device are present, the reference to the device configuration data comprises an IPv6 address expression.

10. Method according to Claim 9,
in which the host header field is formed according to RFC 7230.

11. Method according to one of Claims 1 to 10,
in which the device name of the automation device is a Domain Name System name.

12. Method according to one of Claims 1 to 11,
in which device configuration data of the automation devices are provided by web servers of the automation devices.

13. Method according to one of Claims 1 to 12,
in which the subnetwork comprises a plurality of automation devices to which at least one IPv6 address is allocated in each case, and in which references to device configuration data are changed only for automation devices to which only IPv4 addresses are allocated.

14. Web server component for performing a method according to one of Claims 1 to 13, designed and configured
- to provide a web document (113) together with at least one reference (114) to device configuration data of at least one IPv4-based automation device (210), wherein the automation device (210) is comprised by a subnetwork (210) having a subnetwork control unit (120) within an industrial automation system,
- in the event of a request for the web document (113), to carry out a check to determine whether the request originates from a requesting communication device from an IPv6 subnetwork (100) and/or comprises a destination resource identifier allocated to a web server component (211) of the IPv4-based automation device (210) and having an IPv6 address,
- if the check result is positive, to provide the web document (113) together with a reference (114) to the device configuration data that comprises an Ipv6 address expression for the IPv4-based automation device (210),
- if the request for the web document (113) originates from a requesting communication device from an IPv4 subnetwork (200) and/or comprises a destination resource identifier having an IPv4 address, on the other hand, to provide the web document (113) together with a reference (114) to the device configuration data that comprises an IPv4 address expression for the IPv4-based automation device (210),
- to calculate an IPv6 address for the IPv4-based automation device (210) from an IPv6 prefix allocated to the subnetwork (200) and the IPv4 address of the IPv4-based automation device (210) if the web document is to be provided together with a reference to the device configuration data of the IPv4-based automation device (210) that comprises an IPv6 address expression.

## Revendications

1. Procédé de mise à disposition d'un accès à des données de configuration d'appareil au sein d'un système d'automatisation industriel, dans lequel
- le système d'automatisation industriel comprend un réseau (200) partiel ayant plusieurs appareils (210) d'automatisation et un appareil (120) de commande du réseau partiel,
- un composant (111) de serveur sur la toile associé à l'appareil (120) de commande du réseau partiel met à disposition au moins un document (113) sur la toile, ayant au moins un renvoi (114) à des données de configuration d'appareil d'au moins un appareil (210) d'automatisation reposant sur IPv4,
- à une demande du document (113) sur la toile, on contrôle si la demande provient d'un appareil de communication demandeur d'un réseau (100) partiel IPv6 et/ou comprend un identifiant, ayant une adresse IPv6, de ressources cible associée à un composant (211) de serveur sur la toile d'un appareil de communication demandeur d'un réseau (100) partiel IPv6,
- on met à disposition le document (113) sur la toile, si le résultat du contrôle est positif, avec un renvoi (114) aux données de configuration d'appareil, qui comprend une expression d'adresse IPv6 pour l'appareil (210) d'automatisation reposant sur IPv4,
- on met à disposition le document (113) sur la toile en revanche lors d'une demande du document (113) sur la toile, qui provient d'un appareil de communication demandeur d'un réseau (210) partiel IPv4 et/ou qui comprend un identifiant de ressource cible, ayant une adresse IPv4, avec un renvoi (114) aux données de configuration d'appareil, qui comprend une expression d'adresse IPv4 pour l'appareil (210) d'automatisation reposant sur IPv4,
- on calcule une adresse IPv6 pour l'appareil (210) d'automatisation reposant sur IPv4 à partir d'un préfixe IPv6 associé au réseau (200) partiel et de l'adresse IPv4 de l'appareil (210) d'automatisation reposant sur IPv4 et on met en mémoire l'adresse IPv6 calculée et la dénomination d'appareil associé de l'appareil (210) d'automatisation reposant sur IPv4 dans un serveur de service de dénomination, si le document (113) sur la toile est mis à disposition avec un renvoi (114) aux données de configuration d'appareil de l'appareil (210) d'automatisation reposant sur IPv4, qui comprend une expression d'adresse IPv6.

2. Procédé suivant la revendication 1,
dans lequel on produit et on modifie le renvoi aux données de configuration d'appareil par un module d'adaptation, qui est associé aux composants de serveur sur la toile ou qui est incorporé dans le composant sur la toile mis à disposition.

3. Procédé suivant la revendication 2,
dans lequel le module d'adaptation produit ou modifie dans le document sur la toile, sur demande d'au moins un module d'application du composant de serveur sur la toile, des renvois comprenant des expressions d'adresse de manière indépendante, à des données de configuration d'appareil.

4. Procédé suivant l'une des revendications 2 ou 3,
dans lequel le module d'adaptation contrôle la demande du document sur la toile du point de vue de son origine et/ou du point de vue de l'identifiant de ressource cible.

5. Procédé suivant l'une des revendications 1 à 4,
dans lequel une unité de détection d'appareils périphériques associée à l'appareil de commande du réseau partiel détecte des associations dénomination d'appareil-adresses d'appareils d'automatisation subordonnés à l'appareil de commande du réseau partiel.

6. Procédé suivant la revendication 5,
dans lequel on détecte les associations dénomination d'appareil-adresses au moyen du programme Dynamic Configuration et/ou du programme Simple Network Management.

7. Procédé suivant l'une des revendications 1 à 6,
dans lequel, pour les appareils d'automatisation ayant une adresse IPv4, on détermine dans des adresses IPv4 respectives et dans des adresses IPv6 calculées des règles de transformation d'adresse et dans lequel on applique les règles de transformation d'adresse déterminées par une unité de transformation d'adresse associée à l'appareil de commande du réseau partiel pour une transformation d'adresse entre des adresses IPv4 et des adresses IPv6.

8. Procédé suivant la revendication 7,
dans lequel le composant de serveur sur la toile associé à l'appareil de commande du réseau partiel est intégré à l'unité de transformation d'adresse et dans lequel l'unité de transformation d'adresse comprend un routeur.

9. Procédé suivant l'une des revendications 1 à 8,
dans lequel l'identifiant de ressources cible peut être indiqué dans un champ d'en-tête hôte de la demande et dans lequel le renvoi aux données de configuration d'appareil comprend pour un champ d'en-tête hôte manquant une expression d'adresse IPv4 et dans lequel le renvoi aux données de configuration d'appareil en présence d'un champ d'en-tête hôte et d'un identifiant de ressources cible, qui comprend une adresse IPv6 ou une dénomination d'appareil de l'appareil d'automatisation respectif, comprend une expression d'adresse IPv6.

10. Procédé suivant la revendication 9,
dans lequel on forme le champ d'en-tête hôte conformément à RFC 7230.

11. Procédé suivant l'une des revendications 1 à 10,
dans lequel la dénomination d'appareil de l'appareil d'automatisation est une dénomination dans le système de dénomination de domaine.

12. Procédé suivant l'une des revendications 1 à 11,
dans lequel on met à disposition des données de configuration d'appareil des appareils d'automatisation par le serveur sur la toile des appareils d'automatisation.

13. Procédé suivant l'une des revendications 1 à 12,
dans lequel le réseau partiel comprend plusieurs appareils d'automatisation, auquel est associée respectivement au moins une adresse IPv6, et dans lequel on modifie des renvois à des données de configuration d'appareil seulement pour des appareils d'automatisation auxquels ne sont associées que des adresses IPv4.

14. Composant de serveur sur la toile pour effectuer un procédé suivant l'une des revendications 1 à 13, conformé et conçu,
- pour mettre à disposition un document (113) sur la toile ayant au moins un renvoi (114) à des données de configuration d'appareils d'au moins un appareil (210) d'automatisation reposant sur IPv4, l'appareil (210) d'automatisation étant compris au sein d'un système d'automatisation industriel par un réseau (210) partiel ayant un appareil (120) de commande de réseau partiel,
- s'il se produit une demande du document (113) sur la toile, pour contrôler si la demande provient d'un appareil de communication demandeur d'un réseau (100) partiel IPv6 et/ou comprend un identifiant, ayant une adresse IPv6, de ressources cible, associé à un composant (211) de serveur sur la toile de l'appareil (210) d'automatisation reposant sur IPv4,
- pour que le document (113) sur la toile mette à disposition, si le résultat du contrôle est positif, un renvoi (114) aux données de configuration d'appareil, qui comprend une expression d'adresse IPv6 pour l'appareil (210) d'automatisation reposant sur IPv4,
- pour que le document (113) sur la toile en revanche lors d'une demande du document (113) sur la toile, qui provient d'un appareil de communication demandeur d'un réseau (200) partiel IPv4 et/ou qui comprend un identifiant de ressource cible ayant une adresse IPv4, mette à disposition un renvoi (114) aux données de configuration d'appareil, qui comprend une expression d'adresse IPv4 pour l'appareil (210) d'automatisation reposant sur IPv4,
- pour calculer pour l'appareil (210) d'automatisation reposant sur IPv4, à partir d'un préfixe (IPv6) associé au réseau (200) partiel et de l'adresse IPv4 de l'appareil (210) d'automatisation reposant sur IPv4, une adresse IPv6, si le document sur la toile est mis à disposition avec un renvoi aux données de configuration d'appareil de l'appareil (210) d'automatisation reposant sur IPv4, qui comprend une expression d'adresse IPv6.
